# EUROPEAN PATENT APPLICATION

(11) **EP 2 665 289 A2**
(43) Date of publication of application: **20.11.2013**
(21) Application number: 13165318.0
(22) Date of filing: 25.04.2013
(51) Int. Cl.: H04N 21/4788

(54) **Display apparatus and control method thereof**

(30) Priority: 15.05.2012 KR 20120051292
(71) Applicant: Samsung Electronics Co., Ltd, Gyeonggi-do 443-742 (KR)
(72) Inventor: Yoon, Yeo-ri, Chungcheongbuk-do (KR); Kim, Dae-hyun, Busan (KR); Hyeon, Su-gyeong, Gyeonggi-do (KR)
(74) Representative: Walaski, Jan Filip

(57) **Abstract**

A display apparatus and a control method thereof are provided. The display apparatus includes: a display unit which displays a content image on a screen; a communication unit which communicates with an external server to receive a social network service (SNS); and a controller which displays the content image in a first area of the screen, displays an SNS image in a second area of the screen so that the SNS image and the content image do not overlap, and adjusts both a size of the content image and a size of the SNS image according to a user's input to one of the content image and the SNS image so that the content image and the SNS image do not overlap.

## Description

The present invention relates to a display apparatus and a control method thereof which displays a plurality of images, and more particularly, to a display apparatus and a control method thereof which communicates with a plurality of external devices through a chat.

A display apparatus processes image signals/image data transmitted by various external image supply sources or stored in the display apparatus to display an image on a display panel based on the processed image signal/image data. A display apparatus which is provided to general users may include a television (TV) or a monitor. For example, the display apparatus, which is implemented as a TV, provides an image of a desired broadcasting channel by processing a broadcasting signal transmitted from an external source, through various image processing such as tuning and decoding operations.

With the development of technology and increased contents, the display apparatus performs more diverse and complicated functions beyond simply providing images. For example, the display apparatus, as a client connected to a server through a network, may exchange various signals/data with the server, download various signals/data from the server, and execute various types of applications such as games and application programs.

For example, the application which is executed by the display apparatus includes a chat application. The chat application allows a user using the display apparatus to exchange messages expressed in letters/symbols/images with other users using other devices connected to the display apparatus through a network.

According to an aspect of an exemplary embodiment, there is provided a display apparatus including: a display unit which displays a content image on a screen; a communication unit which communicates with an external server to receive a social network service (SNS); and a controller which displays the content image in a first area of the screen, displays an SNS image in a second area of the screen so that the SNS image and the content image do not overlap, and adjusts both a size of the content image and a size of the SNS image according to a user's input to one of the content image and the SNS image so that the content image and the SNS image do not overlap.

The controller may reduce the size of one of the content image and the SNS image in response to an enlargement of the size of the other one of the content image and the SNS image.

The content image and the SNS image may be displayed so that the content image and the SNS image do not overlap by adjusting the size thereof.

The controller may enlarge the size of the content image according to a user's input to the content image and may enlarge the size of the SNS image according to a user's input to the SNS image.

The SNS image may include an image of a chat which is performed between the display apparatus and an electronic apparatus connected to the external server.

The user's input to the SNS image may include an input through a user input unit of the display apparatus or an input from the electronic apparatus.

According to an aspect of another exemplary embodiment, there is provided a control method of a display apparatus, the control method including: communicating with an external server to receive a social network service (SNS); displaying a content image in a first area of a screen of the display apparatus and displaying an SNS image in a second area of the screen so that the SNS image and the content image do not overlap; and adjusting both a size of the content image and a size of the SNS image according to a user's input to one of the content image and the SNS image so that the content image and the SNS image do not overlap.

The adjusting both the size of the content image and the size of the SNS image may include reducing the size of one of the content image and the SNS image corresponding to an enlargement of the other one of the content image and the SNS image.

The content image and the SNS image may be displayed so that the content image and the SNS image do not overlap by adjusting the size thereof.

The adjusting both the size of the content image and the size of the SNS image may include enlarging the size of the content image according to a user's input to the content image; and enlarging the size of the SNS image according to a user's input to the SNS image.

The SNS image may include an image of a chat performed between the display apparatus and an electronic apparatus connected to the external server.

The user's input to the SNS image may include an input through a user input unit of the display apparatus or an input from the electronic apparatus.

According to an aspect of another exemplary embodiment, there is provided a control method of an image processing apparatus, the control method including: controlling to display a content image in a first area of a screen and to display an SNS image in a second area of the screen so that the content image and the SNS image do not overlap; and controlling to adjust both a size of the content image and a size of the SNS image according to a user's input to one of the content image and the SNS image.

The above and/or other aspects will become apparent and more readily appreciated from the following description of exemplary embodiments, taken in conjunction with the accompanying drawings, in which:
FIG. 1 is a block diagram of a display apparatus according to an exemplary embodiment;
FIG. 2 illustrates a content image and a chat image which are displayed in the display apparatus according to an exemplary embodiment;
FIG. 3 illustrates an example of changes in the content image and the chat image in response to a second operation by the display apparatus according to an exemplary embodiment;
FIG. 4 illustrates an example of changes in the content image and the chat image in response to a first operation by the display apparatus according to an exemplary embodiment; and
FIG. 5 is a control flowchart showing a control method of the display apparatus according to an exemplary embodiment.

Certain exemplary embodiments will be described in greater detail with reference to accompanying drawings so as to be easily realized by a person having ordinary knowledge in the art. Exemplary embodiments may be embodied in various forms without being limited to the exemplary embodiments set forth herein. Descriptions of well-known parts are omitted for clarity, and like reference numerals refer to like elements throughout.

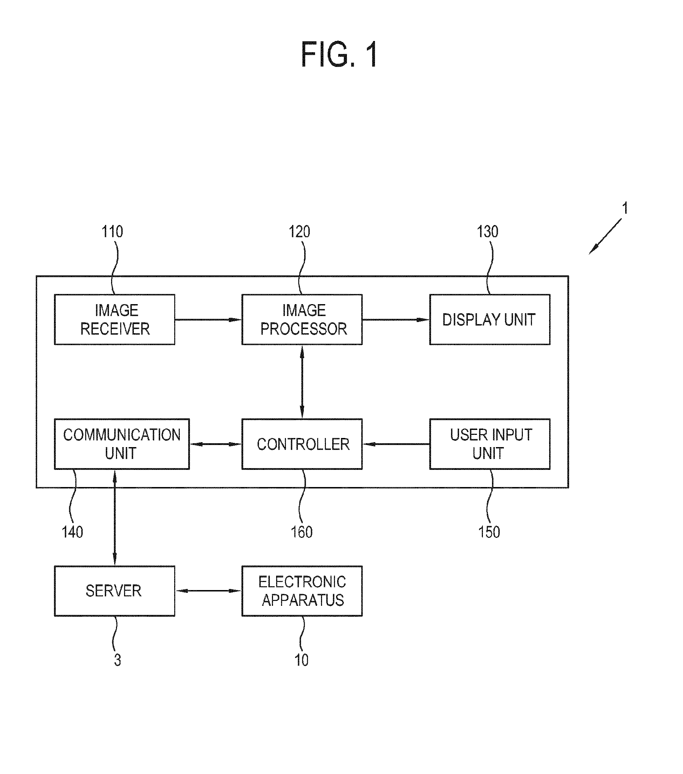

FIG. 1 is a block diagram of a display apparatus 1 according to an exemplary embodiment.

As shown therein, the display apparatus 1 includes: an image receiver 110 which receives image signals/image data from an external image supply source (not shown); an image processor 120 which processes the image signal received by the image receiver 110 to display an image; a display unit 130 (e.g., a display) which displays thereon an image based on the image signal processed by the image processor 120; a communication unit 140 (e.g., communicator) which exchanges at least one of signals/data/information with an external server 3 through a network; a user input unit 150 (e.g., user inputter) which receives preset various control commands and information by a user's manipulation and input; and a controller 160 which controls various operations of the display apparatus 1.

The display apparatus 1 according to the exemplary embodiment may include an apparatus which displays an image based on image signals/image data and exchanges data with the external server 3 or an electronic apparatus 10 connected to the external server 3 for communication through a network. The display apparatus 1 may include a TV. However, it is understood that in one or more other exemplary embodiments, the display apparatus 1 may apply to various other devices which process and display an image, in addition to a TV. For example, the display apparatus 1 may include a monitor, a portable multimedia player (PDP), a mobile phone, etc.

The electronic apparatus 10 connected to the external server 3 may vary as long as it communicates with the display apparatus 1 through a network. For example, the electronic apparatus 10 may include a TV, a PDP, a mobile phone, a computer, etc.

Hereinafter, a detailed configuration of the display apparatus 1 will be described.

The image receiver 110 receives an image signal from an external image supply source (not shown) in a wired/wireless manner and transmits the image signal to the image processor 120. The image receiver 110 may vary depending on a standard of a received image signal and an implementation type of the display apparatus 1. For example, if the display apparatus 1 is implemented as a TV, the image receiver 110 may receive a radio frequency (RF) signal in a wireless manner from a broadcasting station (not shown), or an image signal in a wired manner according to at least one of standards such as composite video, component video, super video, Syndicat des Constructeurs d'Appareils Radiorécepteurs et Téléviseurs (SCART), high definition multimedia interface (HDMI), DisplayPort, unified display interface (UDI), etc. If the image signal includes a broadcasting signal, the image receiver 110 may include a tuner to tune a broadcasting signal by channel.

The display apparatus 1 may receive an image data packet from a server (not shown) through the communication unit 140, and the image processor 120 processes the image data.

The image processor 120 processes the image signal transmitted by the image receiver 110, by performing preset various image processing operations. The image processor 120 outputs the processed image signal to the display unit 130 to display an image on the display unit 130 based on the image signal.

The image processing operation performed by the image processor 120 may include at least one of a decoding operation corresponding to various image formats, a de-interlacing operation for converting an interlace image signal into a progressive image signal, a scaling operation for adjusting an image signal into a preset resolution, a noise reduction operation for improving an image quality, a detail enhancement operation, a frame refresh rate conversion operation, etc.

The image processor 120 may be implemented as a group of individual elements which may individually perform the foregoing operations, a system-on-chip (SoC) which integrates such functions, etc.

The display unit 130 displays thereon an image based on an image signal processed by the image processor 120. The display unit 130 may include liquid crystal, a plasma display panel, light-emitting diode display, organic light-emitting diode display, surface-conduction electron-emitter display, carbon nano-tube display, nano-crystal display, etc.

The display unit 130 may further include additional elements depending on its implementation type. For example, if the display unit 130 includes liquid crystal, the display unit 130 may further include a liquid crystal display (LCD) panel (not shown), a backlight unit (not shown) emitting light to the LCD panel, and a panel driving substrate (not shown) driving the LCD panel.

The communication unit 140 is connected to the external server 3 according to a preset wired/wireless communication protocol, and enables the display apparatus 1 to communicate with the electronic apparatus 10 connected to the external server 3. The communication unit 140 performs an interactive communication to enable the controller 160 to exchange predetermined data with the electronic apparatus 10. For example, the communication unit 140 may transmit data stored in the display apparatus 1 to the electronic apparatus 10 or transmit data from the electronic apparatus 10 to the controller 160 according to a control of the controller 160.

The user input unit 150 transmits preset various control commands and information to the controller 160 by a user's manipulation and input. By way of example, the user input unit 150 may be implemented as a menu key and an input panel provided on an external side of the display apparatus 1, or may be implemented as a remote controller which is separated from the display apparatus 1.

The user input unit 150 may be integrally formed in the display unit 130. For example, the user input unit 150 may include a touch screen which receives a user's touch input. In this case, the display apparatus 1 may receive a signal corresponding to a user's input from the user input unit 150 and transmit the signal to the controller 160.

The user input unit 150 may include a user interface (UI) (e.g., a graphic user interface (GUI)) displayed on the display unit 130 to be selected by a user. If the display unit 130 includes a touch screen, the user input unit 150 may transmit to the controller 160 a command corresponding to a user's input generated by a user touching the UI of the display unit 130.

The controller 160 controls operations of various elements of the display apparatus 1 so that the display apparatus 1 performs various functions and operations including displaying an image. For example, the controller 160 controls the image receiver 110 or the communication unit 140 to transmit the image data to the image processor 120, controls the image processor 120 to process the image data, and controls the display unit 130 to display a content image based on the image data.

The controller 160 may receive a social network service (SNS) from the external server 3. The external server 3 may provide a mutual communication connection service for the display apparatus 1 and the electronic apparatus 10 based on the SNS, and thus the display apparatus 1 may perform various communication services for the electronic apparatus 10.

For example, the controller 160 may execute a chat application installed in the display apparatus 1 to perform communication of messages between the display apparatus 1 and the electronic apparatus 10 connected to the external server 3 through a network.

Chatting may be conducted between a first user of the display apparatus 1 and a second user of the electronic apparatus 10 by inputting and transmitting messages. Further, chatting may be conducted among three or more apparatuses.

The messages may include various texts and graphic images such as letters, numbers, symbols, designs and images.

The first user is a user using the display apparatus 1, and the second user is a user using the electronic apparatus 10. These terms are used only for purposes of distinguishing users.

According to the exemplary embodiment, the SNS provided by the external server 3 to the display apparatus 1 may include a chat service However, it is understood that in one or more other exemplary embodiments, the SNS may provide various other services to the display apparatus, in addition to the chat service.

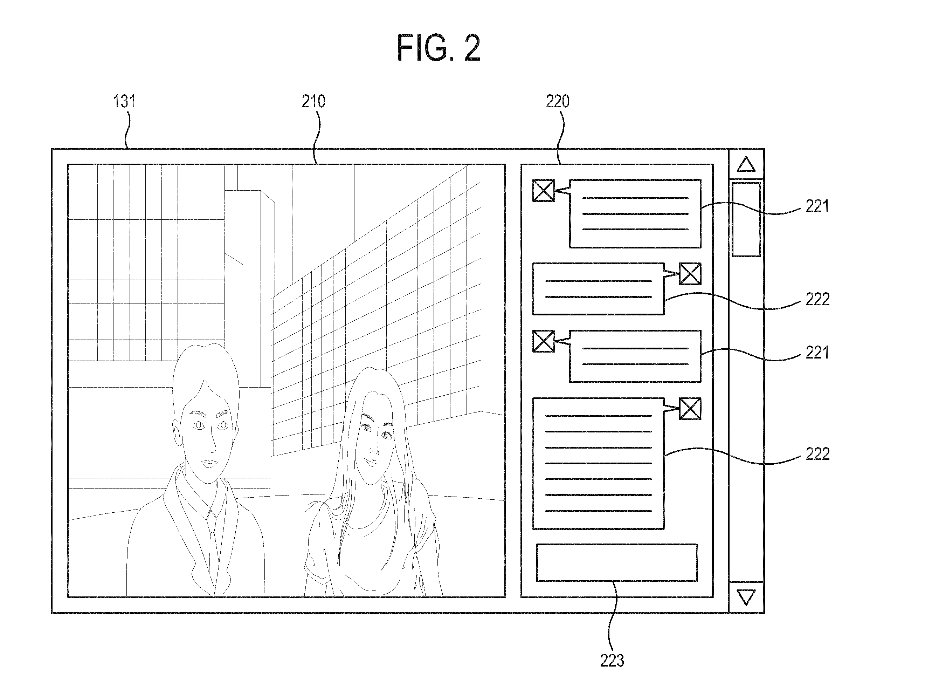

Upon receiving an execution command for the chat application for chatting with the electronic apparatus 10 through the user input unit 150 by the first user of the display apparatus 1, the controller 160 executes the chat application and displays a chat image on the display unit 130. The chat image may replace the content image and be displayed on the display unit 130, or may be displayed in a part of the display unit 130 together with the content image. The latter case will be described with reference to FIG. 2.

FIG. 2 illustrates an example of a content image 210 and a chat image 220 which are displayed in the display apparatus 1 according to an exemplary embodiment.

As shown therein, the controller 160 displays the content image 210 in a first area of a screen 131 of the display unit 130, and displays the chat image 220 in a second area of the screen 131 of the display unit 130. The content image 210 on the first area and the chat image 220 on the second area do not overlap.

When an initial chat image 220 is displayed, the controller 160 enlarges the content image 210 and displays the enlarged content image 210, which is larger than the initial chat image 220. A size of the content image 210 and a size of the chat image 220 depend on the size of the screen 131 of the display unit 130, the nature of the content image 210 and the chat image 220, or other various factors, and thus may not be limited to particular figures.

The controller 160 may display the content image 210 and the chat image 220 in a predetermined area on the screen 131, or display the content image 210 and the chat image 220 in a particular area according to an input command through the user input unit 150.

The content image 210 may include an image based on image signals/image data received by the image receiver 110 or the communication unit 140. The content image 210 may include image data or still image stored in the display apparatus 1, and a plurality of content images 210 may be displayed altogether on the first area of the screen 131.

The chat image 220 may include a message history 221 which is transmitted by the second user of the electronic apparatus 10 to the display apparatus 1, a message history 222 which is input by the first user of the display apparatus 1 to the display apparatus 1 through the user input unit 150, and a message input window 223 which displays a message input by the first user of the display apparatus 1. The message histories 221 and 222 may be displayed in time order in a particular direction, such as a vertical direction, to help a user understand the time relationship between the messages. However, it is understood that in one or more other exemplary embodiments, the chat image may be implemented as various other types.

If the size of the content image 210 and the size of the chat image 220 are fixed, and the content image 210 is relatively larger in size than the chat image 220, the first user of the display apparatus 1 has no problem in viewing the content image 210 but may feel difficult to recognize the chat image 220.

For example, if the display apparatus 1 is implemented as a TV, the first user of the display apparatus 1 generally views the content image 210 at a predetermined distance spaced from the content image 210. In this case, if the size of the chat image 220 is fixed in a relatively small size and the first user of the display apparatus 1 views the content image 210 at the predetermined distance as above, the first user of the display apparatus 1 may feel difficult to recognize letters displayed in the chat image 220.

If the chat image 220 is set in a relatively large size for the first user of the display apparatus 1 to easily recognize the chat image 220, the content image 210 becomes smaller in size and the first user of the display apparatus 1 may find it difficult to view the content image 210.

Accordingly, the display apparatus 1 according to the exemplary embodiment operates as follows:

When the content image 210 and the chat image 220 are displayed on the display unit 130, the controller 160 adjusts both the size of the content image 210 and the size of the chat image 220 according to an interaction to one of the content image 210 and the chat image 220 by a user input.

The size of the content image 210 and the size of the chat image 220 which are changed by a user's input may be set in advance, and may be changed from a default value of the content image 210 and the chat image 220 when the content image 210 and the chat image 220 are displayed initially. That is, each of the size of the content image 210 and the size of the chat image 220 is the default size when the content image 210 and the chat image 220 are displayed initially, and may be enlarged or reduced based on the default size.

The content image 210 and the chat image 220 may be enlarged or reduced based on the default value. For example, the default size of the content image 210 and the chat image 220 may be set to have the size provided when a user's input is performed to the content image 210. This takes into account that the principal purpose of using the display apparatus 1 by the first user is to view the content image 210 and the SNS, e.g., chat service is incidental. Alternatively, the default size of the content image 210 and the chat image 220 may be set to have the size provided when a user's input is performed to the chat image 220.

According to the exemplary embodiment, the size provided when the user's input is performed to the content image 210 is the default size of the content image 210 and the chat image 220. However, it is understood that in one or more other exemplary embodiments, the default size may be provided as various other ways

The controller 160 enlarges the size of the content image 210 upon receiving a user's input to the content image 210, and enlarges the size of the chat image 220 upon receiving a user's input to the chat image 220. The controller 160 reduces the size of the chat image 220 in response to the enlargement of the content image 210, and reduces the size of the content image 210 in response to the enlargement of the chat image 220.

The content image 210 and the chat image 220 are adjusted in size so that the content image 210 and the chat image 220 do not overlap. That is, an image is not covered by another image. Accordingly, if there is a frame surrounding the image, a part of the frame may be overlapped.

The user's input to the content image 210 may include an event of a setting change in the content image 210. Such event may occur when the first user of the display apparatus 1 adjusts various features and states of the content image 210, e.g., brightness, contrast, color, quality, volume, or display additional information, through the user input unit 150. Further, the event may receive from the external server 3 through the communication unit 140, or receive from the image receiver 110 receiving the image data whose nature has been changed.

The user's input to the chat image 220 may include an input of a message by the first user of the display apparatus 1 through the user input unit 150, or a reception of a message from the second user of the electronic apparatus 10 through the communication unit 140. Upon receiving chat message information through the user input unit 150 or the communication unit 140, the controller 160 displays the information on the chat image 220, and thus the user's input to the chat image 220 may include any event by which the chat image 220 is renewed or displayed.

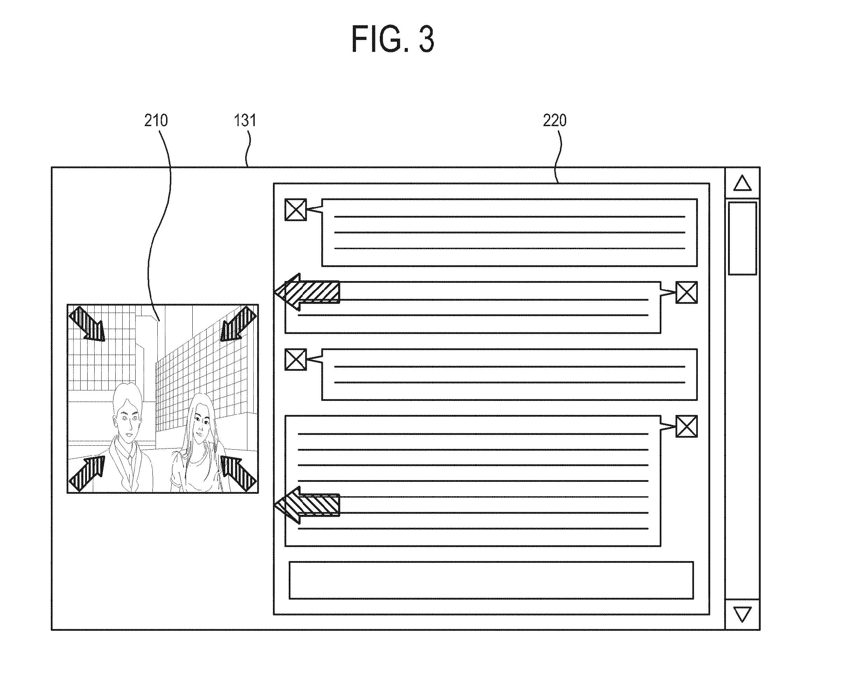

If it is determined that the user's input to the chat image 220 is performed in a default state, the controller 160 adjusts the size of the content image 210 and the chat image 220 as shown in FIG. 3.

FIG. 3 illustrates an example of changes in the content image 210 and the chat image 220 corresponding to the user's input to the chat image 220 according to an exemplary embodiment.

As shown therein, the controller 160 performs a second operation of reducing the size of the content image 210 and enlarging the size of the chat image 220 in response to the interaction to the chat image 220.

For example, if the first user of the display apparatus 1 inputs a message through the user input unit 150, the controller 160 determines that the user's input to the chat image 220 is performed and enlarges the chat image 220 and reduces the content image 210. The controller 160 displays the input message on the chat image 220 and transmits the message to the electronic apparatus 10 through the communication unit 140.

While the message is transmitted through the user input unit 150 or the communication unit 140, the controller 160 displays the message on the chat image 220 to update the chat image 220. If the user's input to the chat image 220 is performed within a preset time, the controller 160 maintains the size of the content image 210 and the size of the chat image 220.

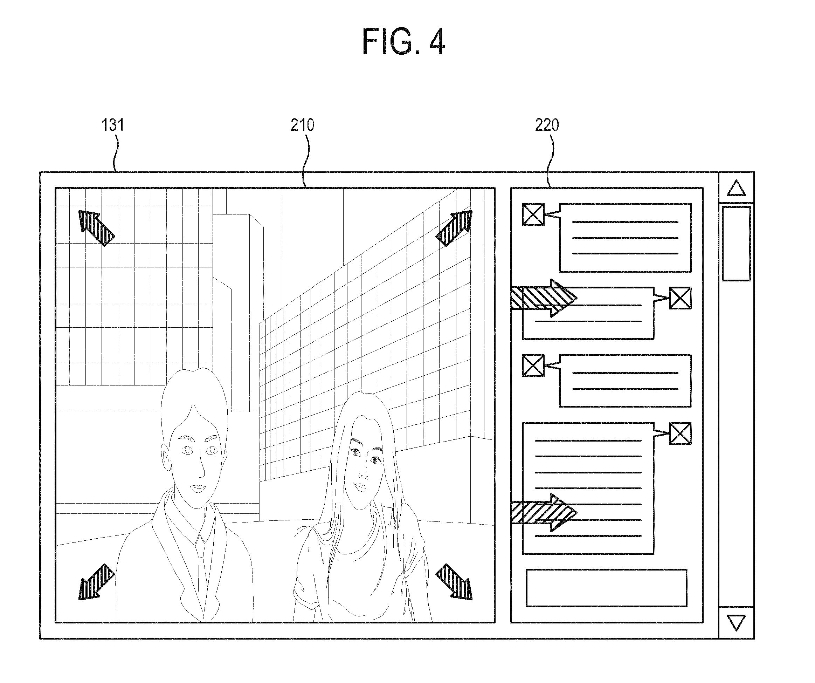

If the user's input to the content image 210 is performed in the display state as in FIG. 3, the controller 160 enlarges the size of the content image 210 and reduces the size of the chat image 220 as shown in FIG. 4.

FIG. 4 illustrates an example of changes in the content image 210 and the chat image 220 corresponding to the user's input to the content image 210 according to an exemplary embodiment.

As shown therein, the size of the content image 210 is enlarged in response to the user's input to the content image 210, and the first user of the display apparatus 1 may adjust the feature of the content image 210 or view the content image 210 without difficulty.

If it is determined that the user's input to the chat image 220 has not been performed within a preset time in the display state as in FIG. 3, the controller 160 may adjust the size of the content image 210 and the size of the chat image 220 as in FIG. 4 without an additional user's input to the content image 210. Such a condition may be set in the display apparatus 1 in consideration of user's various usage patterns.

The content image 210 and the chat image 220 are not overlapped while the size of the content image 210 and the size of the chat image 220 are adjusted so that the first user of the display apparatus 1 may recognize the content image 210 and the chat image 220 without difficulty.

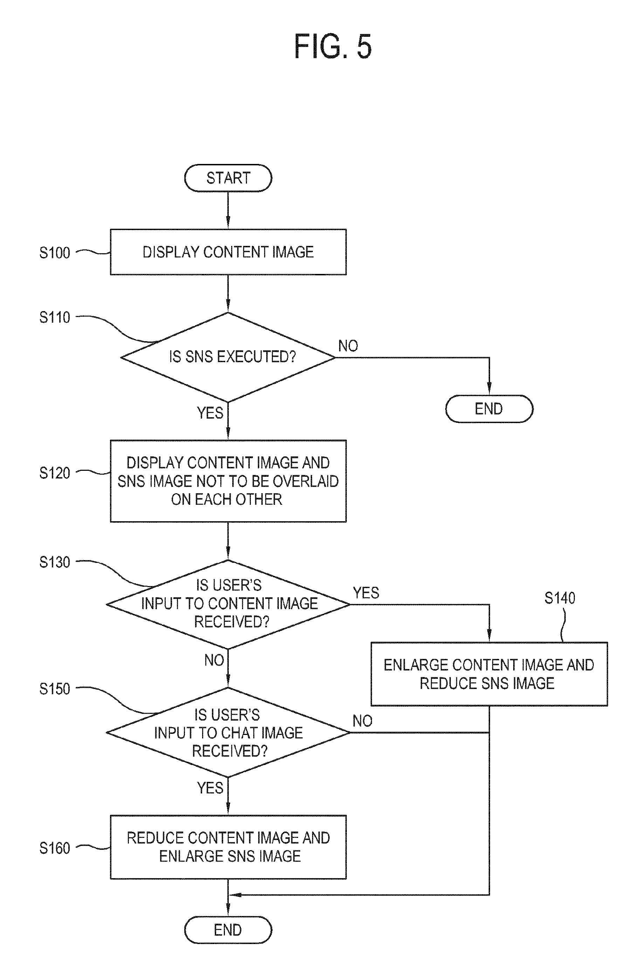

Hereinafter, a control method of the display apparatus 1 according to an exemplary embodiment will be described with reference to FIG. 5. FIG. 5 is a control flowchart showing a control process of the display apparatus 1 according to an exemplary embodiment.

As shown therein, the display apparatus 1 displays the content image (operation S100). If the SNS is executed (operation S110), the display apparatus 1 displays the content image and the SNS image so that the content image and the SNS image do not overlap (operation S120).

The SNS refers to a service which enables a plurality of users to network via a communication network such as the Internet. The SNS enables a user to strengthen the human relationship with friends, seniors and juniors and colleagues and to form a new relationship with others to contribute to forming of broad human relationships. Accordingly, the SNS is an open service based on a broad communication network.

The SNS may be an online platform which generates and strengthens the social relationship through free communication, information sharing and extension of human networking among a plurality of users. For example, the SNS may include a chat, a blog, information/multimedia sharing services and other various services through which a plurality of users connected to the network through communication terminals may share and provide feedback on information and opinions.

The SNS may apply to various areas beyond human networking, through the broad human network among users. For example, the SNS may be used for implementation of social commerce, distribution or sale of contents generated by each user, promotion of public policies, reception of civil complaints, etc.

Upon receiving a user's input to the content image while the content image and the SNS image are displayed (operation S130), the display apparatus 1 enlarges the content image and reduces the SNS image (operation S140). Upon receiving a user's input to the SNS image, the display apparatus 1 reduces the content image and enlarges the SNS image (operation S160).

While the above-described exemplary embodiments relate to a display apparatus 1, it is understood that other exemplary embodiments are not limited thereto. For example, one or more other exemplary embodiments may relate to an image processing apparatus such as a set-top box, a stand-alone control device, an audio/video receiver, an optical media player, an image source, etc.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units or elements of the above-described apparatuses may include a processor or microprocessor executing a computer program stored in a computer-readable medium.

Although a few exemplary embodiments have been shown and described, it will be appreciated by those skilled in the art that changes may be made in these exemplary embodiments without departing from the principles of the inventive concept, the scope of which is defined in the appended claims.

## Claims

1. A display apparatus comprising:
a display unit which displays a content image in at least a part of a screen;
a communication unit which communicates with an external server to receive a social network service (SNS); and
a controller which displays the content image in at least a part of the screen, displays an SNS image in another part of the screen so that the SNS image and the content image do not overlap, and adjusts both the size of the content image and the size of the SNS image according to a user's input to one of the content image and the SNS image.

2. The display apparatus according to claim 1, wherein the controller reduces the size of one of the content image and the SNS image corresponding to an enlargement of the size of the other one of the content image and the SNS image.

3. The display apparatus according to claim 1 or 2, wherein the content image and the SNS image are displayed so that the content image and the SNS image do not overlap by adjusting the size thereof.

4. The display apparatus according to any one of the preceding claims, wherein the controller enlarges the size of the content image according to a user's input to the content image and enlarges the size of the SNS image according to a user's input to the SNS image.

5. The display apparatus according to any one of the preceding claims, wherein the SNS image comprises an image of a chat which is performed between the display apparatus and an electronic apparatus connected to the external server.

6. The display apparatus according to claim 5, wherein the user's input to the SNS image comprises an input through a user input unit of the display apparatus or an input from the electronic apparatus.

7. A control method of a display apparatus comprising:
communicating with an external server to receive an SNS;
displaying a content image in at least a part of a screen of the display apparatus and displaying an SNS image in another part of the screen so that the SNS image and the content image do not overlap; and
adjusting both the size of the content image and the size of the SNS image according to a user's input to one of the content image and the SNS image.

8. The control method according to claim 7, wherein the adjusting both the size of the content image and the size of the SNS image comprises reducing the size of one of the content image and the SNS image corresponding to an enlargement of the other one of the content image and the SNS image.

9. The control method according to claim 7 or 8, wherein the content image and the SNS image are displayed so that the content image and the SNS image do not overlap by adjusting the size thereof.

10. The control method according to any one of claims 7 to 9, wherein the adjusting both the size of the content image and the size of the SNS image comprises enlarging the size of the content image according to a user's input to the content image; and
enlarging the size of the SNS image according to a user's input to the SNS image.

11. The control method according to any one of claims 7 to 10, wherein the SNS image comprises an image of a chat performed between the display apparatus and an electronic apparatus connected to the external server.

12. The control method according to claim 11, wherein the user's input to the SNS image comprises an input through a user input unit of the display apparatus or an input from the electronic apparatus.
